Europäisches Patentamt

European Patent Office

Office européen des brevets

(19)

(11) Publication number: **0 438 981 A1**

# EUROPEAN PATENT APPLICATION

(12)

(21) Application number: **90830110.4**

(22) Date of filing: **19.03.90**

(51) Int. Cl.5: **H02K 11/00, H02K 3/32**

(30) Priority: **18.01.90 IT 50290 U**

(43) Date of publication of application:
**31.07.91 Bulletin 91/31**

(84) Designated Contracting States:
**DE ES FR**

(71) Applicant: **F.I.M.E. - S.R.L.**
**Via Ho Chi Min 2/A**
**I-60022 Castelfidardo (AN)(IT)**

(72) Inventor: **Bacchiocchi, Alberto**
**Via Ho Chi Min 2/A**
**Castelfidardo (AN)(IT)**

(74) Representative: **Baldi, Claudio**
**Piazza Ghislieri, 3**
**I-60035 Jesi (Ancona)(IT)**

(54) Device for alternating current electric motor coils fitted with pocket for housing and stopping the overload cutout thermal switch.

(57) This invention relates to a winding "pack" for the two field pole excitation coils of alternating current electric motor stators.

The "pack" according to the invention, is moulded in plastic and has a pocket for housing and stopping the overload cutout thermal switch, machined along the edge of the external face of one of the two side flanges of the "pack" in which the coil is wound.

FIG. 1

# PACK FOR ALTERNATING CURRENT ELECTRIC MOTOR COILS HAVING A POCKET FOR HOUSING AND STOPPING THE OVERLOAD CUTOUT THERMAL SWITCH

This patent application for an industrial utility model concerns a winding "pack" for the excitation of two field poles of the alternating current electric motor stators, having a pocket for housing the overload cutout thermal switch which interrupts the electrical power supply of the motor when the temperature of the copper wire spirals reaches a preset value indicating dangerous overheating of the motor which must consequently be stopped immediately to prevent irreparable burning.

It is common knowledge to sector technicians that the copper wire spirals making up the excitation coils of alternating current electric motor stator are wound in special support and housing ring coils commonly known as "packs" in this field, the same being fitted externally in the yoke section for closing the magnetic field.

These "packs" made of electric insulating material are currently moulded in a single piece of plastic material consisting of two identical rectangular flanges fitted side by side at short intervals and joined together by an intermediate collar having a rectangular profile around which the copper wire spiral is wound inside the two above flanges which act as side supporting and housing edges in order to guarantee regular and orderly winding of the coil turns.

The purpose of this invention is to find a stable and suitably positioned point for the overload cutout thermal switch which has to date been placed in an improvised and insecure position.

Often in fact this switch, consisting of a small rectangular plate shaped probe is simply placed above the electric winding or in other cases fitted in the empty space between the coil turns and the tabs which close the "pack" externally only on the two opposite sides.

Two tabs produced during moulding on one of the two above flanges are placed on the two longer sides of the flange which, once the coil has been completed are turned upside down by 90° and hooked by means of special snap pin to the other flange in order to close the coil within the "pack" externally on two sides.

Sometimes this thermal switch is fitted in the empty space between the coil and these side closing tabs of the "pack" with the inconvenience that the switch can not be stopped securely in those cases when the coil, being small, leaves a very wide space or vice versa having to excessively force the switch in those cases when the coil, being large, leaves a very narrow space.

The solution that has been proposed to resolve this problem is a small bracket suitable for fitting to the edge of one of the two above flanges of the "pack" for supporting the thermal switch securely.

If on one hand the above bracket undoubtedly makes it possible to stop and position the thermal switch securely, on the other hand it certainly can not guarantee uniform and constant times and readings by the thermal switch as the electric motor on which the same is installed, varies. It is in fact obvious that, barring the position of the switch being unchanged with respect to the "park", the distance between the switch and the underlying turns of the coil which, the larger the coil the closer, and vice versa, the same are to the coil, vary on different motors.

In view of the problems encountered in the systems and methods adopted to date for positioning the thermal switch close to the excitation coils of the field poles of the electric motor stator, a definite solution has been found to the problem by fitting one of the two "pack" flanges, preferably the external flange, with a pocket where this switch can be housed securely at a closer distance to the spirals next to which it is fitted on the side, in that it is in fact fitted into a notch produced during moulding on the external surface of one of the two coil housing and side supporting flanges.

In the model according to the invention, the distance between the thermal switch and the side of the spiral is always equal to the thickness of the flange of the "pack" and is therefore independent from the different radial expansion which the coil may at times be subject to as the electric motor in which the same is fitted, varies. The thermal switch inside the pocket on the "pack" according to the invention may either be positioned after the "pack" is moulded or during moulding so that the switch is in fact embedded in the moulding material in its housing pocket.

For the sake of clarity the description according to the invention continues with reference to the enclosed tables which are intended for illustrative purpose and not in a limiting sense in which:

- fig. 1 is an axonometric illustration of a "pack" according to the invention having a pocket for housing the overload cutout thermal switch also illustrated in the figure.
- fig. 2 is an axonometric illustration of an alternating current electric motor in which the "pack" according to the invention has been applied.

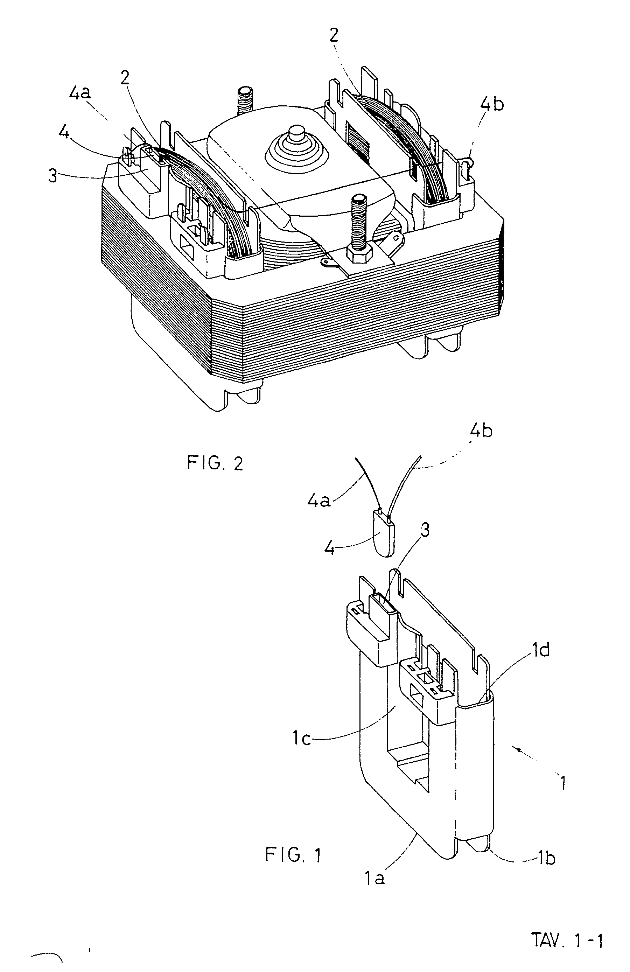

With reference to fig. 1 the model according to the invention consists of a "pack" (1) having standard shape and construction moulded in a single piece of plastic material and consisting of two identical rectangular flanges (1a and 1b) positioned side by side at a short interval and joined together by a collar (1c) having a rectangular profile around which the excitation reel (2) is wound.

On one (1a) of the two above flanges , two tabs (1d) are made during moulding on the two longer sides of the flange (1a) which, once the spiral (2) has been completed, are closed outside the latter and hooked to the other flange (1b) by means of standard snap fitting pins.

The peculiarity of the "pack" (1) according to the invention is that the same has a pocket (3) along the edge of one of the two above flanges, preferably the external flange, the same being produced during moulding on the external wall of this flange with a depth reaching the above collar (1c).

The thermal switch (4) may be conveniently and securely housed within this pocket (3) so that the thermal switch is therefore placed next to the spiral (2) for the full radial expansion of the latter from its innermost turns, namely those in direct contract with the collar (1c).

The wire connections (4a and 4b) of the switch (4) have also been indicated in fig. 2.

## Claims

1. A pack for alternating current electric motor coils having a pocket for housing and stopping the overload cutout thermal switch of the type consisting of a pack (1) moulded in plastic material and consisting of two identical rectangular flanges (1a and 1b) fitted side by side at a short interval and joined together by a collar (1c), a rectangular profile, around which the excitation coil (2) is wound, characterized in that along the edge of one of the two flanges (1a and 1b) there is a pocket (3) produced during moulding on the external wall of this flange and being of a suitable size to house the overload cutout thermal switch (4).

2. A pack for alternating current electric motor coils having a pocket for housing and stopping the overload cutout thermal switch according to claim 1, characterized in that the depth of the pocket (3) reaches the above collar (1c).

FIG. 2

FIG. 1

TAV. 1-1

European
Patent Office

**EUROPEAN SEARCH
REPORT**

Application Number

**EP 90 83 0110**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 112 405   (M. JOSEPH) <br> * column 2, lines 32 - 46 * * column 3, line 14 - column 4, line 3; figures 2-5 * <br> — — — | 1,2 | H 02 <br> K 11/00 <br> H 02 K 3/32 |
| X | US-A-4 102 973   (R. HANNING) <br> * column 4, lines 1 - 7; figure 2 * <br> — — — | 1,2 | |
| A | US-A-4 656 378   (CH. G. ATHERTON ET AL.) <br> * abstract; figures 1, 3 * <br> — — — — — | 1 | |

|  |  |
|---|---|
| | TECHNICAL FIELDS SEARCHED (Int. Cl.5) |
| | H 02 K 3/00 <br> H 02 K 11/00 |

The present search report has been drawn up for all claims

| Place of search | Date of completion of search | Examiner |
|---|---|---|
| Berlin | 18 April 91 | GESSNER E A F |